# EUROPÄISCHE PATENTANMELDUNG

(11) **EP 1 820 679 A1**
(43) Veröffentlichungstag der Anmeldung: **22.08.2007**
(21) Anmeldenummer: 07000733.1
(22) Anmeldetag: 16.01.2007
(51) Int. Cl.: B60H 3/06

(54) **Fahrzeugklimaanlage mit einem Luftfilter**

(30) Priorität: 15.02.2006 DE 10606847
(71) Anmelder: Bayerische Motorenwerke Aktiengesellschaft, 80809 München (DE)
(72) Erfinder: Schmidt, Christian, 82110 Germering (DE)

(57) **Zusammenfassung**

Fahrzeugklimaanlage mit einem Luftfilter, der ein Gehäuse (6) mit einer Zuströmöffnung (7) und einer Abströmöffnung (8) aufweist, wobei in dem Gehäuse von Luft durchströmtes Filtermaterial angeordnet ist, wobei es sich bei dem Filtermaterial (11) um Schüttgut handelt.

## Beschreibung

Die vorliegende Erfindung betrifft eine Fahrzeugklimaanlage mit einem Luftfilter gemäß dem Oberbegriff des Patentanspruches 1.

Bei modernen Fahrzeugen, die mit einer Fahrzeugklimaanlage ausgestattet sind, ist in die Klimaanlage häufig ein Luftfilter bzw. Mikrofilter integriert, der Schadstoffe, wie z.B. feine Rußpartikel oder schädliche Gase, aus der in den Fahrgastraum eingeleiteten Frischluft herausfiltern soll. Derartige Filter werden im Folgenden als Luftfilter bezeichnet. Sie sind üblicherweise in speziellen Filtergehäusen verbaut und in den Luftführungskanälen vor dem Klimagerät, meistens im Motorraum, angeordnet oder auch direkt in das Klimagerät integriert. Die Filter bestehen üblicherweise aus einem Filtervlies. Das Filtervlies ist üblicherweise in Zick-Zack-Faltung gefaltet und wird von einem umlaufenden Halterahmen gehalten. Der Halterahmen hält das Filtervlies in Form und ermöglicht eine Befestigung im Filtergehäuse. Bei Premiumfahrzeugen werden an die Luftreinigungsgüte erhebliche Anforderungen gestellt. Dies impliziert eine gewisse "Mindestgröße" der Filter. Durch den Aufbau in Zick-Zack-Faltung mit umlaufendem Rahmen ist die Geometrie derartiger Mikrofilter in der Regel ein Quader, dessen Kantenlängen dem im Fahrzeug vorhandenen Bauraum angepasst werden müssen. Üblicherweise besteht im Motorraum Bauraummangel, was dazu führt, dass bei manchen Fahrzeugen mehrere kleinere Filterelemente verwendet werden müssen. Alternativ dazu kann auch von der Quadergrundform abgewichen werden oder die Filterelemente können gekrümmt ausgeführt werden, was jedoch mit erheblichen Zusatzkosten verbunden ist. In jedem Fall ist ein Abweichen von der einfachen Quadergeometrie mit Zusatzkosten verbunden.

Aufgabe der Erfindung ist es, eine Fahrzeugklimaanlage mit einem Luftfilter zu schaffen, der kompakt aufgebaut ist und dessen Bauraumgeometrie flexibel gestaltbar ist, d.h. dessen Bauraumgeometrie den im Fahrzeug vorhandenen Platzverhältnissen in einfacher und kostengünstiger Weise angepasst werden kann.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Fahrzeugklimaanlage mit einem Luftfilter, der ein räumlich praktisch beliebig gestaltbares Gehäuse aufweist, in das das Filtermaterial in Form von Schüttgut eingebracht ist.

Ein wesentlicher Vorteil der Erfindung besteht darin, dass die Bauraumgeometrie des Luftfilters, d.h. das Filtergehäuse, geometrisch frei gestaltbar ist. Hinsichtlich der Gestaltung der Schüttgutpartikel gibt es eine Vielzahl von Möglichkeiten. Die Schüttgutpartikel bzw. die Filterpartikel können z.B. in der Form eines Granulats oder in der Form von Flocken oder "Pads" dargestellt werden. Im Falle flockenartiger Schüttgutpartikel können diese flächig aber uneben sein, ähnlich der Form von Kartoffelchips. Durch eine derartige "3D-Formgebung" wird erreicht, dass das Schüttgut hinreichend von Luft durchströmt werden kann, d.h. eine "Blockbildung" wird vermieden. Die einzelnen Flocken bzw. Pads können z.B. die Größe einer Briefmarke haben. Die von einem "Filterpartikel" überdeckte Fläche kann beispielsweise im Bereich zwischen 900 mm² und 2500 mm² liegen. In der Draufsicht können einzelne flockenartige Elemente im Wesentlichen quadratisch oder allgemein rechteckförmig gestaltet sein. Die Dicke der flockenartigen Filterpartikel kann z.B. im Bereich zwischen 1 mm und 10 mm liegen, vorzugsweise im Bereich zwischen 3 mm und 5 mm.

Ein derartiger Luftfilter kann auch als "Kombifilter" ausgeführt sein, d.h. als Luftfilter, der sowohl Schadstoffpartikel, wie z.B. Ruß, und schädliche Abgase aus der Luft herausfiltert. Ein Kombifilter lässt sich z.B. dadurch darstellen, dass die Schüttgutpartikel eine "luftdurchlässige" Außenhaut, z.B. aus Vliesmaterial, aufweisen und mit einem gasausfilternden bzw. schadstoffadsorbierenden Material, wie z.B. Aktivkohle, gefüllt sind. Alternativ dazu könnte das gasausfilternde bzw. schadstoffadsorbierende Material auch in Granulatform in einem luftdurchströmten Zusatzbehälter der Fahrzeugklimaanlage angeordnet sein, der in Strömungsrichtung vor oder nach dem Luftfilter, der Partikel aus der Luft herausfiltert, angeordnet ist.

Da das Filtermaterial nur eine begrenzte Filterkapazität aufweist, muss es von Zeit zu Zeit ausgetauscht werden. Das Gehäuse, in dem das Filtermaterial untergebracht ist, sollte daher eine Wartungsöffnung aufweisen. Um den Austausch des schüttgutartigen Filtermaterials zu erleichtern, kann das Filtermaterial in Form eines luftdurchlässigen Servicepakets vorkonfektioniert sein. Das "Servicepaket" kann beispielsweise sackartig, kissenartig oder netzartig gestaltet sein und braucht dann lediglich mit einem Handgriff in das Filtergehäuse eingebracht bzw. rausgenommen zu werden.

Im Folgenden wird die Erfindung im Zusammenhang mit der Zeichnung näher erläutert. Es zeigen:
- Figuren 1 und 2: herkömmliche Mikrofilter von Fahrzeugklimaanlagen;
- Figur 3: das Grundprinzip eines Luftfilters gemäß der Erfindung;
- Figur 4: ein Filterpad gemäß der Erfindung in perspektivischer Darstellung;
- Figur 5: ein Filterpad gemäß der Erfindung im Querschnitt;
- Figur 6: ein Servicepaket gemäß der Erfindung; und
- Figur 7: einen in das Luftkanalsystem einer Fahrzeugklimaanlage integrierten Luftfilter gemäß der Erfindung in Schnittdarstellung.

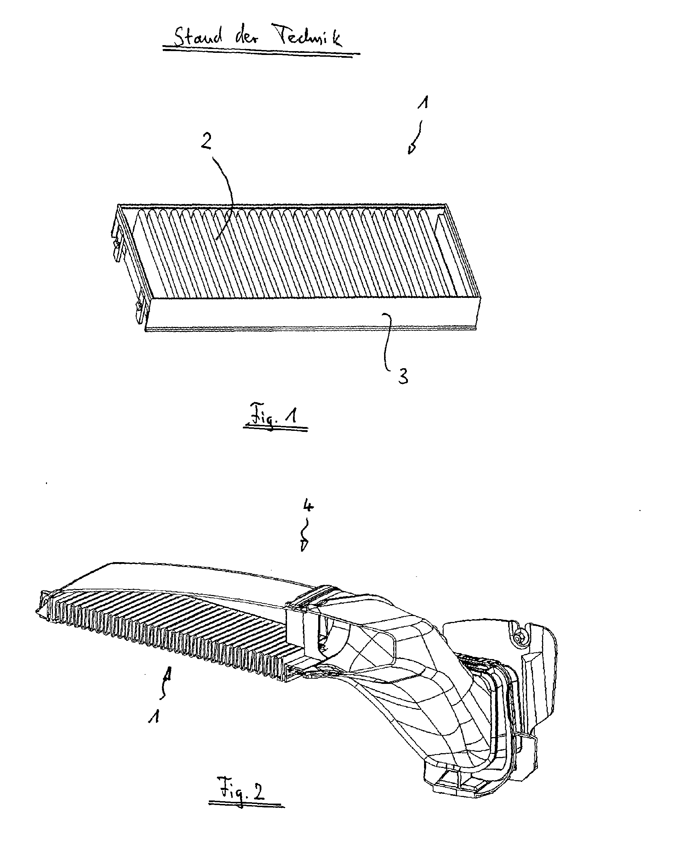

Figur 1 zeigt einen herkömmlichen Mikrofilter 1, wie er in Fahrzeugen nach dem Stand der Technik verbaut wird. Der Mikrofilter 1 weist eine Filtermatte 2 auf, die aus einem Filtervlies hergestellt und in Zick-Zack-Faltung gefaltet ist. Die Filtermatte 2 wird von einem umlaufenden Rahmen 3 gehalten. Die Form des Mikrofilters 1 ist somit im Wesentlichen quaderförmig.

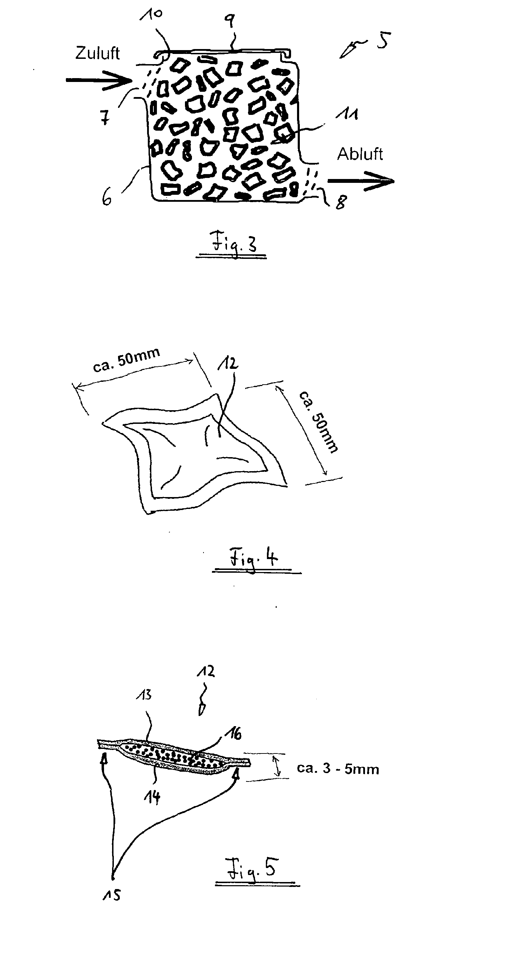

Figur 2 zeigt einen Ausschnitt aus einem Luftkanal 4 einer hier nicht näher dargestellten Fahrzeugklimaanlage. In den Luftkanal 4 ist der Mikrofilter 1 der Figur 1 integriert. Derartige quaderförmige Mikrofilter können relativ kostengünstig hergestellt werden. Angesichts der Bauraumbeschränkungen im Motorraum moderner Fahrzeuge erschwert jedoch die Quaderform eine Integration in das Luftführungssystem der Fahrzeugklimaanlage erheblich. Ein Abweichen von der Quaderform wiederum ist mit nicht unerheblichen Zusatzkosten verbunden.

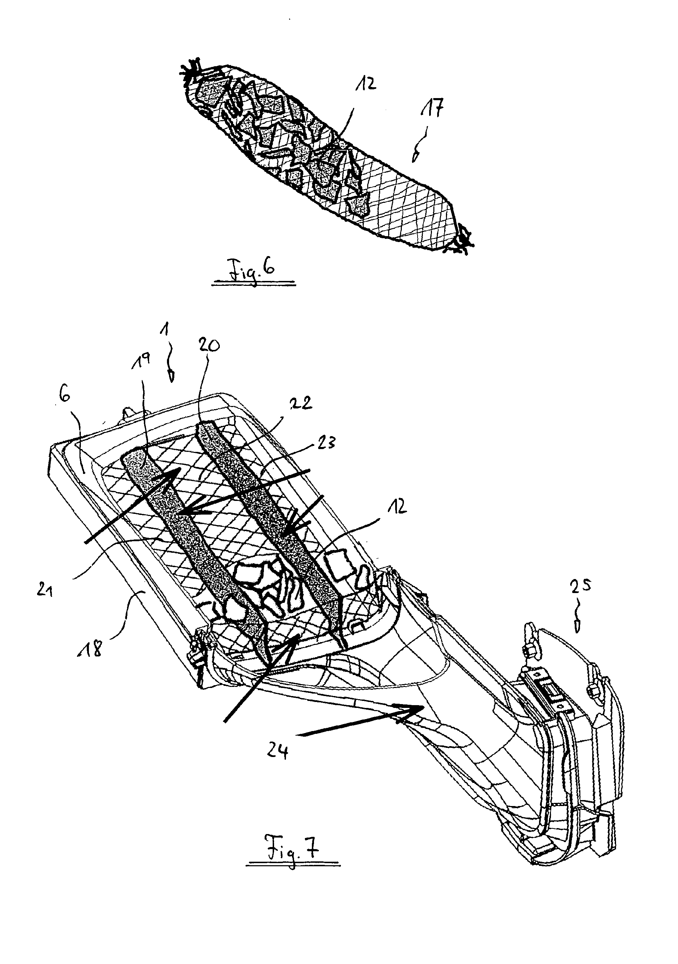

Figur 3 zeigt einen Luftfilter gemäß der Erfindung. Der Luftfilter 5 weist ein Filtergehäuse 6 auf. Das Filtergehäuse wiederum weist einen Zuluftkanal 7, einen Abluftkanal 8 und eine durch einen Wartungsdeckel 9 verschlossene Wartungsöffnung 10 auf. Das Filtergehäuse 6 ist mit einem schüttgutartigen Filtermaterial 11 gefüllt. Das Filtermaterial kann z.B. granulatförmig, flockenförmig, padförmig oder anderweitig konfektioniert sein.

Figur 4 zeigt exemplarisch einen solchen Schüttgutpartikel 12. Der Schüttgutpartikel 12 hat die Form eines in der Draufsicht im Wesentlichen quadratischen Pads bzw. einer in der Draufsicht im Wesentlichen quadratischen Flocke. Der Schüttgutpartikel 12 weist bei dem hier gezeigten Ausführungsbeispiel eine Kantenlänge von ca. 50 mm auf. Ähnlich einem Kartoffelchip ist der Schüttgutpartikel 12 flächig aber uneben. Flächig bedeutet in diesem Zusammenhang, dass seine Länge und Breite in einer Draufsicht um ein Vielfaches größer als seine Dicke ist. Die Schüttgutpartikel können in der Draufsicht beispielsweise eine Fläche überdecken, die im Bereich zwischen 900 mm² und 5000 mm² liegt. Der in Figur 4 gezeigte Schüttgutpartikel überdeckt in der Draufsicht eine Fläche von 2500 mm².

Wenn der Luftfilter ausschließlich Feststoffpartikel aus der Luft herausfiltern soll, können die Schüttgutpartikel ausschließlich aus einem Filtervlies hergestellt sein. Wenn zusätzlich schädliche Abgase aus der Luft herausgefiltert werden sollen, wird ein sogenannter "Kombifilter" benötigt. Ein Kombifilter umfasst ein gasausfilterndes bzw. schadstoffadsorbierendes Material, wie z.B. Aktivkohle. Gasausfilterndes bzw. schadadsorbierendes Material kann in die Schüttgutpartikel integriert sein.

Figur 5 zeigt einen solchen Schüttgutpartikel eines Kombifilters. Der Schüttgutpartikel 12 besteht aus einer luftdurchlässigen Oberschicht 13 und einer luftdurchlässigen Unterschicht 14, die z.B. aus einem Filtervlies hergestellt sein können. Die beiden Schichten 13, 14 sind entlang ihres Randes 15 miteinander verbunden. Zwischen den beiden Schichten 13, 14 befindet sich gasausfilterndes bzw. schadstoffadsorbierendes Material 16, wie z.B. Aktivkohle. Wird ein derartiger Schüttgutpartikel von Luft durchströmt, so filtern die beiden Schichten 13, 14 Feststoffpartikel aus der Luft heraus und die Aktivkohle 16 filtert schädliche Abgase aus der Luft heraus.

Die Schüttgutpartikel können, wie in Figur 6 dargestellt, in vorgegebenen Mengen zu luftdurchlässigen, sackartigen, kissenartigen oder netzartigen Servicepaketen 17 vorkonfektioniert sein. Derartige Servicepakete können mit einem einzigen Handgriff über die Wartungsöffnung 10 (vgl. Figur 3) in das Filtergehäuse 6 eingebracht bzw. aus dem Filtergehäuse 6 herausgenommen werden.

Figur 7 zeigt einen Schnitt durch einen Luftkanal 18 einer hier nicht näher dargestellten Fahrzeugklimaanlage. In den Luftkanal 18 ist das Filtergehäuse 6 eingebracht, in dem wiederum durch Trennstege 19, 20 voneinander separierte Servicepakete 21 - 23 angeordnet sind, die mit Filterpads 12 befüllt sind. Nach Durchströmen des Mikrofilters 1 gelangt die gereinigte Luft über einen Reinluftkanal 24 einen Stirnwanddurchgang 25 in einen hier nicht näher dargestellten Fahrgastraum eines Fahrzeugs.

## Patentansprüche

1. Fahrzeugklimaanlage mit einem Luftfilter (1), der ein Gehäuse (6) mit einer Zuströmöffnung (7) und einer Abströmöffnung (8) aufweist, wobei in dem Gehäuse (6) von Luft durchströmtes Filtermaterial (11) angeordnet ist,
**dadurch gekennzeichnet, dass** es sich bei dem Filtermaterial (11) um Schüttgut handelt.

2. Fahrzeugklimaanlage nach Anspruch 1,
**dadurch gekennzeichnet, dass** es sich bei dem Schüttgut um flockenartige Elemente (12) handelt.

3. Fahrzeugklimaanlage nach Anspruch 2,
**dadurch gekennzeichnet, dass** die flockenartige Elemente (12) flächige, unebene Elemente sind.

4. Fahrzeugklimaanlage nach einem der Ansprüche 2 oder 3,
**dadurch gekennzeichnet, dass** einzelnen flockenartige Elemente jeweils eine Fläche überdecken, die im Bereich zwischen 900 mm² und 5000 mm² liegt.

5. Fahrzeugklimaanlage nach einem der Ansprüche 2 bis 4,
**dadurch gekennzeichnet, dass** einzelne flockenartige Elemente in einer Draufsicht im Wesentlichen quadratisch sind.

6. Fahrzeugklimaanlage nach einem der Ansprüche 2 bis 5,
**dadurch gekennzeichnet, dass** die flockenartigen Elemente eine Dicke aufweisen, die im Bereich zwischen 1 mm und 10 mm liegt.

7. Fahrzeugklimaanlage nach einem der Ansprüche 2 bis 6,
**dadurch gekennzeichnet, dass** die flockenartigen Elemente aus einem Filtervlies hergestellt sind.

8. Fahrzeugklimaanlage nach einem der Ansprüche 2 bis 7,
**dadurch gekennzeichnet, dass** die flockenartigen Elemente jeweils aus mindestens zwei luftdurchlässigen Schichten (13, 14) bestehen, zwischen denen sich ein gasausfilterndes Material (16) befindet.

9. Fahrzeugklimaanlage nach Anspruch 8,
**dadurch gekennzeichnet, dass** das gasausfilternde Material Aktivkohle ist.

10. Fahrzeugklimaanlage nach einem der Ansprüche 1 bis 9,
**dadurch gekennzeichnet, dass** es sich bei dem Filtermaterial (11) um granulatartige Elemente handelt.

11. Fahrzeugklimaanlage nach einem der Ansprüche 1 bis 10,
**dadurch gekennzeichnet, dass** das Gehäuse (6) eine Wartungsöffnung (10) aufweist, über die das Schüttgut ausgetauscht werden kann.

12. Fahrzeugklimaanlage nach einem der Ansprüche 1 bis 11,
**dadurch gekennzeichnet, dass** eine vorgegebene Menge Filtermaterial (11) in einem luftdurchlässigen, sackartigen, kissenartigen oder netzartigen Servicepaket (17) vorkonfektioniert ist und das das Filtermaterial enthaltende Servicepaket (17) in das Gehäuse eingebracht ist.

13. Fahrzeugklimaanlage nach einem der Ansprüche 1 bis 12,
**dadurch gekennzeichnet, dass** das Gehäuse (6) eine von der Quaderform abweichende Form hat.
